# EUROPEAN PATENT SPECIFICATION

(11) **EP 2 793 660 B1**
(45) Date of publication and mention of the grant of the patent: **18.07.2018**
(21) Application number: 12818555.0
(22) Date of filing: 21.12.2012
(51) Int. Cl.: A47J 27/21

(54) **LIQUID HEATING VESSEL AND CONTROL**
WASSERKOCHER UND STEUERUNG DAZU
RÉCIPIENT DE CHAUFFAGE DE LIQUIDE ET COMMANDE

(30) Priority: 23.12.2011 GB 201122323; 30.05.2012 GB 201209622; 26.07.2012 GB 201213336
(43) Date of publication of application: 29.10.2014
(73) Proprietor: Otter Controls Limited, Derbyshire SK17 7LF (GB)
(72) Inventor: SO, Richard Chee Cheung, Melbourne, Victoria 3000 (AU); HADFIELD, Robert, Stockport, Cheshire SK6 6DF (GB); BUXTON, Mark, Chapel En Le Frith, High Peak, Derbyshire SK23 9TZ (GB); GAETA, Antonio, Buxton, Derbyshire SK17 6RA (GB); WRIGHT, Peter Hallam, Leek, Staffordshire ST13 6LN (GB)
(74) Representative: Cross, James Peter Archibald
(86) International application number: PCT/GB2012/053243
(87) International publication number: WO 2013/093506

(56) References cited:
- WO-A1-01/62129
- GB-A- 2 435 812
- GB-B- 2 392 598

## Description

The present invention relates to electrically powered liquid heating vessels and to sealing means therefor.

### Background to the Invention

A problem with existing electric liquid heating vessels, such as kettles and the like, is efficient and sufficient illumination. Existing electric liquid heating vessels are often designed with a transparent or translucent 'water window' so that the water level within the vessel can be easily seen by the user. In some types of vessel, the entire wall of the vessel is made of glass or polycarbonate. It is also known to provide a light source within or above the water level of the kettle, for example, to illuminate the contents of the vessel so that the water level can be seen more easily and to illuminate any markings on the vessel wall against which the water level can be measured. It is also known for the illumination means to indicate the status of the appliance.

However, such a light source typically does not illuminate a transparent wall or water window very well, since most of the light passes through and this illumination means falls short of the expectations of the user. Since it is difficult to illuminate the whole vessel then the illumination effect may be improved by making part of the wall portion translucent so as to scatter more light, but then the interior of the vessel can no longer be seen clearly. Illumination may be improved by increasing the power of the light source, but this uses more energy. It is known to provide an illuminated annular ring in the vicinity of the side of the glass (as later described) however the effect of this, in illuminating features in the glass vessel, is limited. Illumination means may also be provided, as described in the applicant's own patent application WO-A2-2009/138736, using a coating sensitive to UV light; however this coating requires an additional operation and is therefore more expensive than a standard appliance.

The illumination of features or markings, such as water level indicators, on glass vessels is particularly problematic and there is a need to provide a low cost means to illuminate these features which is consistent with the expectations of the user. Furthermore it would be advantageous to provide an illumination means that fits within the tried and tested standard assembly methods, particularly the gluing of heating elements into glass vessels, so that the illumination means may be adopted by the appliance manufactures without significant changes to tooling or assembly line processes.

Notwithstanding the need for innovation to cooperate with existing production processes, there is scope to improve existing processes. As detailed above, generally, in the prior art, heating elements are installed into glass-bodied appliances by gluing, however, this process is time consuming and does not easily facilitate removal in the case of rework.

The gluing of elements onto glass bodies or ceramic bodies is a complex process, for example, an adhesive is required between the element plate and the glass body which serves to secure the element plate to the glass body and to provide a seal between the element plate and the glass body. Using adhesives as securing means requires the adhesive to be cured in order to provide adequate securing and sealing. However, the curing process may be a lengthy process and/or may require specific environmental conditions to promote the curing process. Typically, it takes between 3 to 9 days for the adhesive to be cured. Even when cured, adhesives may give off an odour and/or may leave a taste and taint in the heated liquid.

During the curing process, the heating plate must be kept aligned with the vessel body, for example, by a jig to allow the element plate to be concentric with the vessel body. Furthermore, the jig may also be used to protect the fragile glass body from impact damage. Each appliance to be assembled may require the use of the jig for the duration of the curing process. The provision of such a number of jigs is expensive and there is a need to provide a means to secure elements into glass vessels without jigs.

In addition, when using glue as a securing method, the process is permanent and it may not be possible to rework the appliance. Therefore, there is a need to provide means for removal of the element plate from the glass vessel without damaging either component in case of rework.

In other prior art element assemblies, the element plate may be secured by a clamping means. However, in the case that the element plate is larger than both the top and bottom body apertures of the reservoir then generally the element plate is positioned below the bottom aperture and secured thereto. However, with such assemblies the screws or other fixing means are difficult to assemble inside the body. Furthermore, these fixing means are visible from inside the appliance and may make the appliance difficult to clean. Therefore, there is a need to provide a securing means for element plates into such appliances in which the screws or other fixing means are not accessible and/or visible within the reservoir.

Patent publication GB-A-2435812 discloses an electrically powered liquid heating vessel according to the pre-characterising portion of claim 1. GB-A-2392598 discloses an electrically powered liquid heating vessel with silicone sealant used to hold two parts together. WO-A-01/62129 A1 discloses a kettle with a translucent body.

### Statements of the Invention

Aspects of the present invention are set out in the accompanying claims.

### Brief Description of the Drawings

Specific embodiments of the invention will now be described with reference to the drawings identified below.
Figure 1 is a schematic cross-section of a cordless liquid heating appliance in an embodiment of the invention.
Figure 2 is a section view of a prior art illuminated glass bodied appliance.
Figure 3 is a perspective view of an illuminated transparent or translucent bodied appliance with its sub base having a partial cut away view according to another embodiment of the present invention.
Figure 4 is an exploded view of the transparent or translucent vessel body, element plate and illumination assembly of the embodiment of Figure 3.
Figure 5 is a schematic section view of the illuminated transparent or translucent bodied appliance according to the embodiment of Figures 3 and 4, illustrating the illumination assembly.
Figure 5a is a schematic section view of the illuminated transparent or translucent bodied appliance according to the embodiment of Figures 3 and 4, illustrating a variant of the illumination assembly of Figure 5a.
Figure 6 is an exploded view of the transparent or translucent vessel body, element plate and illumination assembly according to another embodiment of the present invention.
Figure 6a is a schematic cross-section of the appliance illustrating a further embodiment of the invention.
Figure 7 is a schematic section view of the illuminated transparent or translucent bodied appliance according to the embodiment of Figure 6, illustrating the illumination assembly.
Figure 7a is an exploded view of the heating element of Figures 4 and 6, illustrating a variant of the illumination assembly.
Figure 7b is an assembled view of the heating element and the illumination assembly of Figure 7a.
Figure 7c is a perspective view of the lighting holder of Figures 7a and 7b.
Figure 7d is cross sectional view through line A-A of Figure 7b.

### Detailed Description of Embodiments

### Appliance Overview

The following description discloses innovations that individually, or in combination, with will impact upon very specific appliance designs and may also find use in alternative domestic and commercial appliances.

The embodiments are presented in separate sections of this document and each of these sections will include a brief introduction to the specific problem.

To avoid duplication of the background, the description refers to lowering prices, reducing material costs and reducing size etc. but in doing so is taking into consideration each of the above aspects that may be relevant to the specific disclosure.

The solutions are presented in separate sections of this document and each of these sections may include a brief introduction to the specific problem.

Within the statement of invention, description and claims, unless otherwise stated, the upward and downward directions refer to the orientation of a vessel when placed upright on a horizontal surface. Axial refers to the principal, normally substantially vertical axis of the vessel. Radial refers to a direction substantially orthogonal to the axial direction, but does not necessarily imply that the vessel is circular cylindrical

Within the statement of invention, description and claims, unless otherwise stated, any female connector or connecting part that includes the live electrical parts will be hereon referred to in the description as the socket and any male connector or connecting part that plugs into the socket will be hereon referred to as the plug.

In the following description, functionally similar parts carry the same reference numerals between different embodiments. The drawings are intended to be schematic, and dimensions and angles may not be determined accurately from them unless otherwise stated.

The following description discloses a combination of measures that will advantageously impact on costs and price in all their aspects.

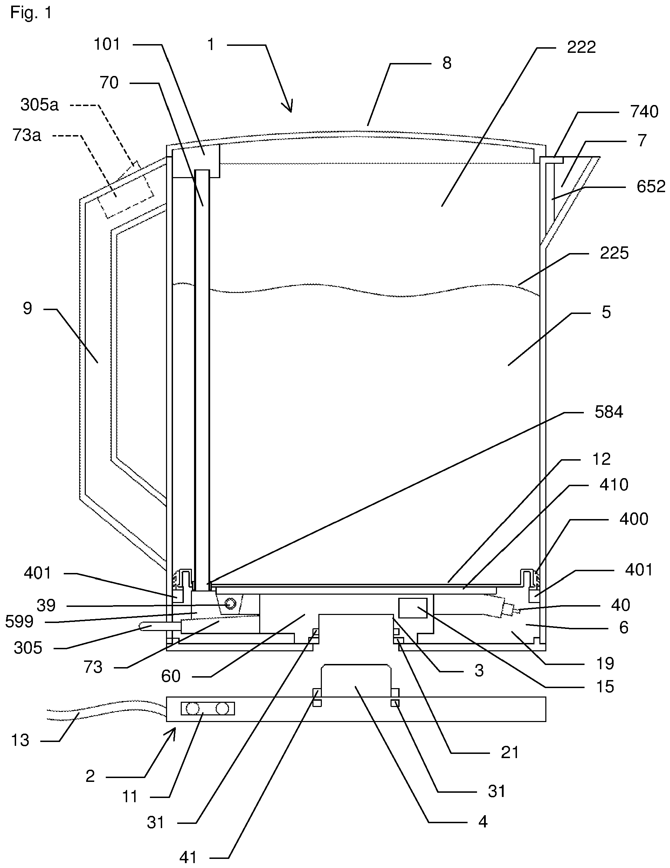

At least some embodiments may rely on, or refer to, or relate to, the features of Figure 1 by reference to the figure reference numerals in Figure 1.

In the following description the electrical power supply lead into the base 2 or appliance 1 may be described by the term cord (13) and the term cable (336). It is intended that each term has a similar or equivalent meaning.

Within the statement of invention, description and claims, unless otherwise stated, the terms liquid and water are intended to have equivalent meaning.

Within the statement of invention, description and claims, unless otherwise stated, the terms kettle, appliance, vessel and reservoir may have equivalent meaning.

Within the statement of invention, description and claims, unless otherwise stated, the terms part and portion are intended to have equivalent meaning.

Within the statement of invention, description and claims, unless otherwise stated, when describing electrical connections the terms discrete contact, contact portion and contact area are intended to have equivalent meaning.

Within the statement of invention, description and claims, unless otherwise stated, when describing one part of a heating element the terms heat transfer plate and heat diffuser plate are intended to have equivalent meaning.

Within the statement of invention, description and claims, unless otherwise stated, when describing one part of a vessel body the terms opening and aperture are intended to have equivalent meaning.

Within the statement of invention, description and claims, unless otherwise stated, when describing the trip lever and/or control the terms over centre and bistable are intended to have equivalent meaning.

Figure 1 illustrates schematically a jug kettle with a mechanical actuator, as an example of a liquid heating appliance to which embodiments of the invention may be applied. In this example, the kettle is a cordless kettle comprising a vessel body 1 and a power base 2 having respective body and base cordless connectors 3 and 4, such as 360° cordless connectors of the type described in the applicant's own patent publication WO94/06285 and/or as sold by Otter Controls Ltd under, for example, the CS4/CS7 Series (power base socket) and the A1, CP7 or CP8 (appliance plug) references. The power base 2 is connectable by a power cord 13 to an electrical power outlet (not shown). Each of the vessel body 1 and/or base 2 and/or cordless connector 3 and/or cordless connector 4 may be provided with emitters and/or detectors 31, annular seals 21 which may be optically transmissive and/or annular optically transmissive rings 41

The jug kettle may include an electro mechanical control 60, for example the applicant's own A1 series integrated 360° control, or an electronic control 15. The electro mechanical control 60 may include an integral steam switch 73 or alternatively a discrete steam switch 73a may be provided, within, for example, the handle 9. The appliance may be provided with a switch actuator 305 or 305a which interacts with the control 60, for example through a known over-centre trip lever mechanism (not shown in Figure 1), to toggle between operating states of the appliance. Alternatively an electronic control 15 may employ an alternative user interface 11. Either or both of the electronic control 15 and/or user interface 11 may be situated in one or both of the vessel body 1 and/or base 2.

The vessel body 1 comprises a reservoir 5 for containing liquid to be heated, lid 8, spout 7, handle 9 and a base section 6 having a sub-base 19, which forms the bottom surface of the vessel body 1. The spout may provide primary venting and/or pressure equalisation. The lid 8 may be operable to open and close with a user actuator and may be secured to the vessel with a hinge, latch or other means. The lid may be securably sealed to the vessel so that the lid remains in place and does not leak liquid in the case that the appliance is tipped over.

A steam tube 70 and steam cap 101 may be provided. The steam tube communicates from the area above the water level 225 to the steam switch 73 or 73a. The steam tube may be formed, for example as part of the handle 9 or wall of the reservoir 5 or as illustrated as a separate tube. In the case that the steam tube passes through the element then a suitable seal 584 and additional steam guide 599 may be provided. The vessel body 1 may be any shape and formed, for example, from plastic, metal, glass or ceramic. The vessel body may comprise a single wall as illustrated or alternatively a twin wall so that, for example, the vessel may be better insulated against heat loss or to render the wall cool to the touch.

Liquid is heated by an element plate 12 which may form the base of the reservoir 5. The reservoir 5 of the appliance 1 may be provided with water level markings and/or other features that indicate the state of the appliance 1. The element plate 12 includes a heating means and is connected to receive electrical power via the connector 3. The heating means may comprise a sheathed element 39 as illustrated or may comprise a thick film element, induction element and/or diecast element arrangement. There may be provided a heat transfer means 410 and the plate 12 may be composed of stainless steel and/or other suitable substrate. As illustrated the element plate 12 may be sealed into the vessel body 1 using the Easifix (RTM) sealing arrangement as described in WO-A-99/17645 or alternative sealing means may be employed, for example gluing, welding or clamping. The element plate 12 may be supported in the vessel body 1 by a removable annular support 401. The element sealing system may also include an intermediate flange 438 between the element plate 12 and the vessel body 1.

At least some embodiments of the present invention are applicable to liquid heating vessels having a heating element immersed in the water, rather than an element on the underside of the vessel.

At least some embodiments of the present invention are applicable to liquid heating vessels connectable directly by a power cord rather than a cordless connector.

At least some of the embodiments in the invention are applicable to kettles or heated vacuum flasks and pots, blenders, irons, wasserkochers, coffee and espresso makers, juicers, smoothie makers, food processors, soup makers, sauce makers, steamers, tea makers, chocolate fountains, fondues, slow cookers, vacuum pots, milk frothers, water coolers, water dispensers, pans, vending machine, and/or hot water on demand appliances. It will be appreciated that the above list is not exhaustive.

### Illuminating Vessels

The following embodiments and figures illustrate the gluing of heating element plates onto glass vessels. The gluing of heating element plates onto glass vessels is known per se and unless otherwise stated, need not be described further.

The inventors understand that existing sealing and fixing means, for example the annular channel 12g of an element plate 12, provide the opportunity to improve the illumination means in glass or other translucent vessels and seek to make these improvements without substantially modifying the tried and tested production sealing and fixing methods.

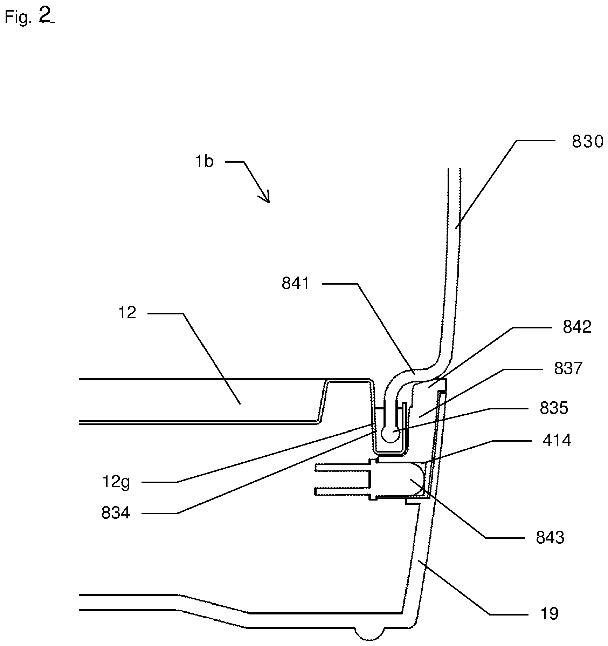

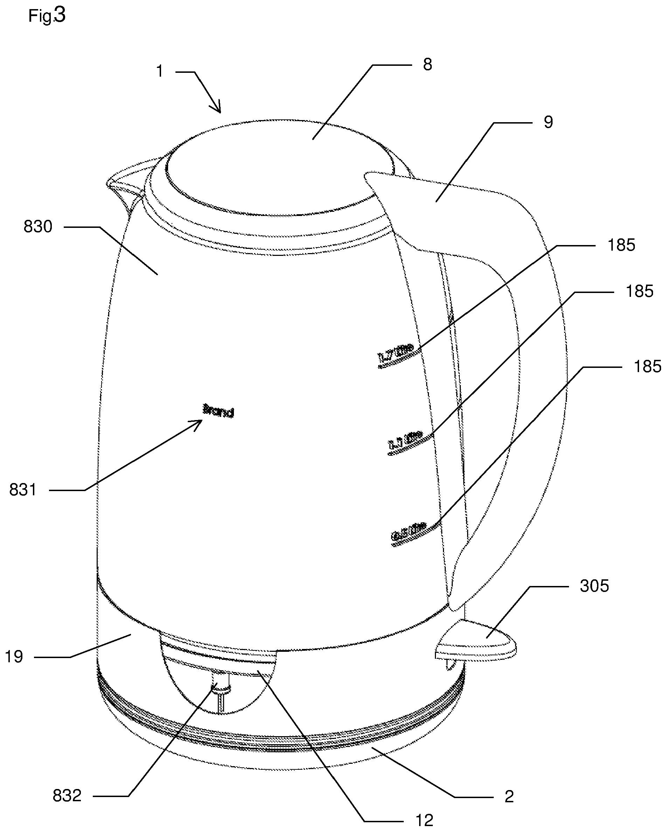

It should also be noted that the cross sectional shape and form of the glass vessel and element cooperate in the prior art assembly in Figure 2 is different to the cross sectional shape and form of the glass vessel and element cooperate in the specific embodiments of Figures 3 to 7d. However, the cross sectional shape and the form of the glass vessel and element cooperate is not limiting and each is equally applicable to the invention.

The said figures illustrate glass vessels however the invention is equally as applicable to other translucent vessels including polycarbonate or any optical transmissive material.

Figure 2 illustrates a prior art glass-bodied appliance 1, wherein a glass body 830 is positioned and secured within a peripheral channel 12g of an element plate 12 by an adhesive 834. An annular diffuser ring 837 is provided to improve the illumination effect within a glass body 830. The annular diffuser ring 837 is provided with a series of apertures 414 for receiving a plurality of light sources 843. As illustrated, the apertures 414 are positioned substantially perpendicular to the annular diffuser ring 837.

The annular diffuser ring 837 is also provided with an annular flange 842 extending from its distal end. The annular flange 842 abuts a curve 841 of the glass body 830, in which light is transmitted to the glass body 830 by the contact between the annular flange 842 and the curve 841. As illustrated, the annular diffuser ring 837 is secured between the glass body 830 and a sub base 19.

As illustrated, the annular diffuser ring 837 may extend between the sub base 19 and the vessel 830 so that the guide is visible to the user. This arrangement may enable the transfer of light into the translucent body when viewed from above, however there is poor illumination of indicating features on the body 830 when viewed from the side. Furthermore, this arrangement adds considerably to the cost and complexity of the appliance 1 and some known implementations have made the appliance 1 wider in order to accommodate this additional light guide 837.

In addition, with glass vessels, it is difficult to control the complicated manufacturing and assembling tolerances of this assembly, and in particular the contact between the annular flange 842 and the curve of the body 841 with the result that the light transmission in this prior art embodiment may vary from appliance to appliance.

The following description discloses means of providing a more capable and cost effective illumination means, than the prior art, which substantially improves the user perception of the illumination without substantially changing the construction methods of the element to the glass body.

Figure 3 illustrates a perspective view of an illuminated transparent or translucent bodied appliance 1 according to the present embodiment. The appliance 1 comprises a transparent or translucent vessel body 830 secured to an element plate 12 by gluing or other sealing means.

As previously described, the transparent or translucent vessel body 830, may be made from glass, polycarbonate or any optical transmissive material. The transparent or translucent vessel body 830 may be provided with a series of water level indicators 185, other cosmetic or surface features, for example, a label, logo or decal 831 indicative of the manufacturer or brand. The water level indicators 185, label and/or other cosmetic or surface features 831 may be printed, coated, etched, grit blasted, indented, moulded, recessed or may protrude from/on the inner or outer surface of the transparent or translucent vessel body 830 and/or a feature in the body 830 for example the rim of a spout 7. Each of which features may be enhanced by the disclosed illumination means.

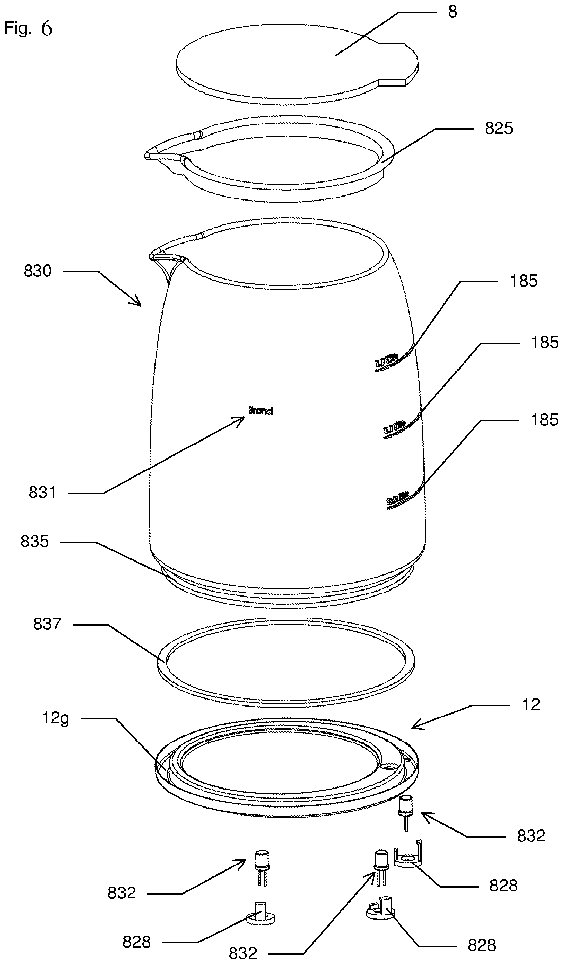

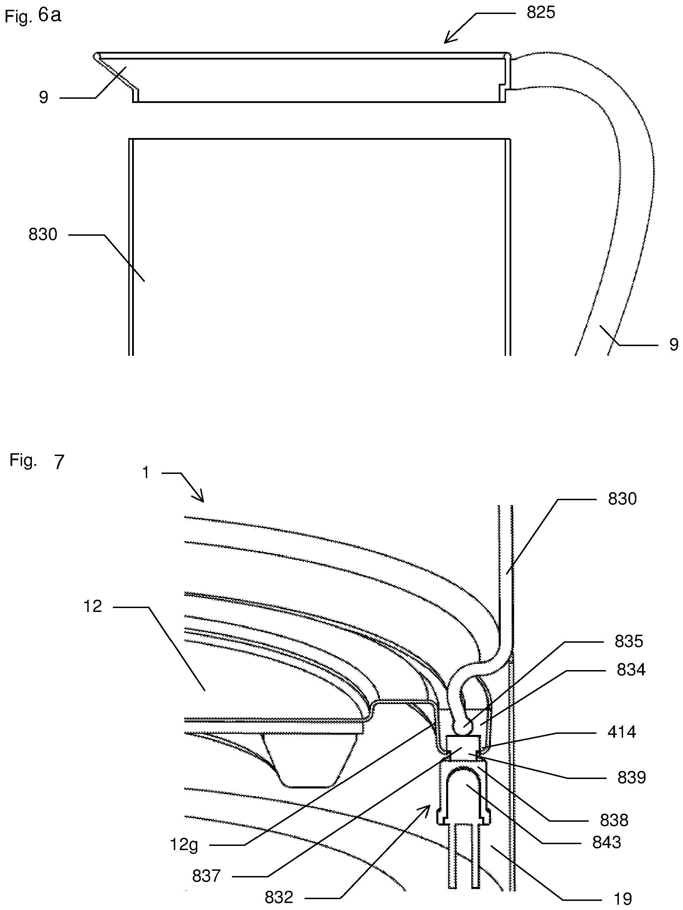

In further embodiments, there may be provided at least one discrete decorative or functional component or portion 825 that may be positioned above or in communication with the rim at the top of the glass and may provide an additional illuminated feature, for example, as illustrated in Figures 6 and 6a.

The at least one discrete illuminated component or portion 825 may be a collar or strap attached to the top rim of the vessel 830 that may form a sealing face against, for example, the lid 8. Alternatively the component or portion 825 may form and/or communicate with and/or attached to and/or act as a support for at least one of the following: a lid 8, lid hinge 169, spout 7, filter 652 and/or handle 9. So that each of the lid 8, lid hinge 169, spout 7, filter 652 and/or handle 9 may act as an illuminated feature.

As schematically illustrated in Figure 3, at least one illumination assembly 832 may be provided within the sub base 19 beneath and/or within the element plate 12 and may be located substantially below and/or substantially aligned with a cosmetic or surface feature 831, which will be described in more detail below.

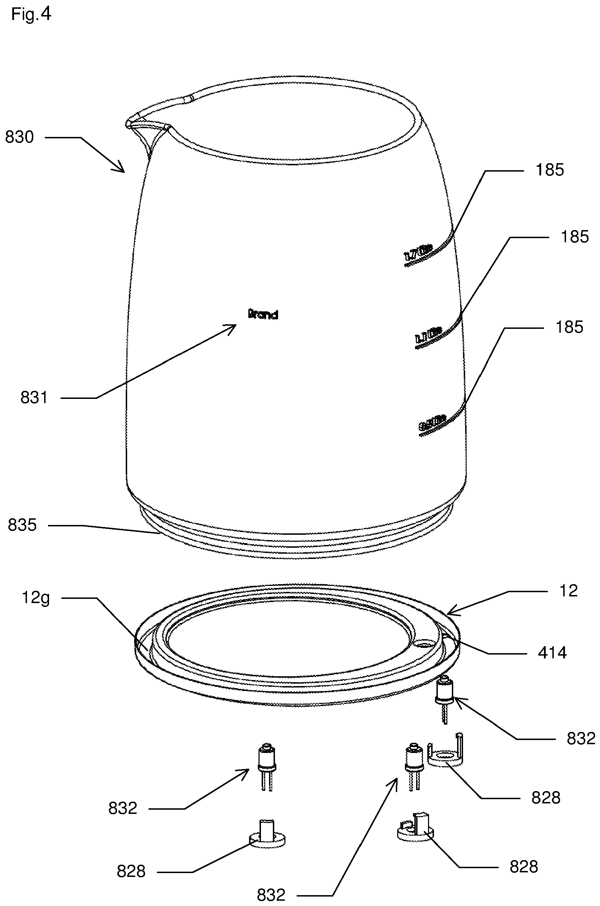

Figure 4 illustrates an exploded view of the transparent or translucent vessel body 830, element plate 12 and illumination assembly 832 according to the present embodiment. The element plate 12 comprises a peripheral channel 12g, in which a free end 835 (the bottom rim) of the transparent or translucent vessel body 830 is located therein. The peripheral channel 12g may be provided with at least one aperture 414 for receiving an illumination assembly 832.

The illumination assembly 832 may consist of an LED and/or other illuminating means 843 or may also comprise a lens 833, a diffuser portion 836 and/or a housing 838. The assembly 832 may also include a support member or flange 828 which may be attached to, or form part of, for example, an individual housing 838. As further alternatives, the support member or flange 828 may be provided separate from the illumination assembly 832 and/or may act to support a series of assemblies 832 and/or may be integrated with other parts of the appliance, for example, the appliance sub base 19. Each of the support members or flanges 828 may be removed after, for example, the glue has cured or alternatively may act to permanently retain the assembly 832 within the element plate 12 in the assembled appliance. Support members or flanges 828 may also be employed to retain the illuminating assembly 832.

Advantageously, the apertures in the peripheral channel 12g and each of the illumination means 832 may be arranged substantially below and/or aligned with the water level indicators 185 and/or cosmetic or surface features 831 or other feature for illumination thereof so as to concentrate the illumination in the required areas.

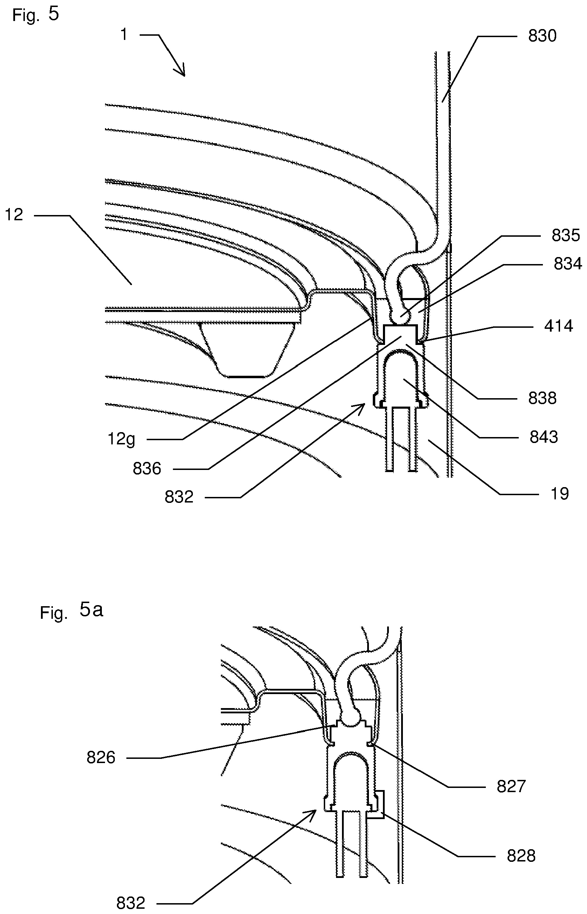

Figure 5 illustrates a schematic cross section through the appliance 1 according to the present embodiment.

The peripheral channel 12g may comprise a curable adhesive and/or sealant material 834, which may be flowable, for securing and sealing the free end of the vessel body 830 and/or at least one illumination assembly 832 within the channel 12g. Within the statement of invention, description and claims, unless otherwise stated, the application of the curable adhesive and/or sealant material 834 may be also referred to as a gluing process and are intended to have equivalent meaning.

The peripheral channel 12g of the element plate 12 also includes at least one aperture 414 in which at least one illumination housing 838, made from an optical transmissive material, is placed prior to sealing. The illumination housing may contact the bottom rim 835 of the body 830 and so act as a direct transmission means between the LED 843 (or other illumination means, for example, neon lights or any other type of light emitter) and the bottom rim 835 of the body 830.

Advantageously, applying the light source in the direction of, and preferably in contact with, the bottom rim 835 of the vessel body, enables the wall of the vessel body 830 to act as a light transmission means and so overcomes many of the problems associated with illuminating a transparent or translucent vessel body 830 in prior art appliances.

The illumination housing 838 may be provided with a diffuser portion 836 at its distal end and a plurality of illumination housings 838 may be used to support the transparent or translucent vessel body 830 within the element peripheral channel 12g during the application and curing process of the adhesive 834. In the case that the housing 838 is used to support the vessel body 830, it is preferred, but not limiting, that the LEDS or other illuminating means 843 are added into the assembly 832 after the gluing process so that no damage occurs to electrical components during the assembly and curing.

Each of part of the illumination assembly 832 may also be provided with a resilient indent or other feature 827 and or interference fit so that the assembly 832 may be retained within aperture 414 of the element plate 12 during assembly. Alternatively or additionally other features (not shown) may be provided around the aperture 414 to provide retention for the illumination assembly 832.

Furthermore, for example as illustrated in Figure 5a, the illumination assembly 832 may be provided with features 826 that act to position the distal end of the glass during assembly.

Additionally, as illustrated in Figure 5a, support members or flanges 828 and/or other features, for example indents and/or an interference fit and/or adhesive may be employed to retain the illuminating means 843 into the assembly 832.

It is expected that the sealing means 834 between the wall of the vessel body 830, housing 838 and the peripheral channel 12g will serve to seal the appliance against leaks. However, in alternative embodiments, the illumination housing 838, for example with indent 827 as illustrated in Figure 5a, may be manufactured from a resilient or flexible material, for example silicon, which may then enable a seal to be formed between the illumination housing 838 and the aperture 414 of the channel 12g.

As previously described, the end of the housing 838 and/or diffuser portion 836 directs the illumination means directly at the bottom rim 835 and the wall of the vessel body 830 may then act as a light guide or light transmission means. The light is then able to transmit or travel via the wall of the transparent or translucent vessel body 830 and is able to reflect against or around the cosmetic or surface features of the appliance 1, for example, the level indicators 185, label, logo or decal 831, thus making these features more visible. As previously described the illumination means may be provided immediately below and/or aligned with the areas to be illuminated to further enhance the illumination effect. Advantageously, light may also be also transmitted to each edge of the transparent or translucent vessel body so that, for example, the edge or rim of the spout 7 may be illuminated. The light may also be transmitted onto any adjacent component(s) of the appliance 1, for example, the lid 8 or handle 9.

In some cases the illumination housing 838 and the illumination means 843 may be provided as an integral component and both glued to the peripheral channel 12g at the same time as the body 830.

As detailed above, in the case that the LEDs or other illuminating means 843 are provided as separate components, it is preferred, but not limiting, that the LED or other illuminating means 843 is assembled into the housing 838 after the curing process to prevent unnecessary damage to the illumination means.

In alternative embodiments, a sacrificial insert (not shown) may be inserted into the aperture 414 during the gluing process and when removed may form a recess for the subsequent insertion of either the illumination means 843 and/or the housing 838.

The water level indicators 185, label and/or other cosmetic or surface features 831 may be printed, etched or applied onto the transparent or translucent vessel body 830 with fluorescent, or optically reflective or metallic-flaked coatings to further enhance the illumination effect.

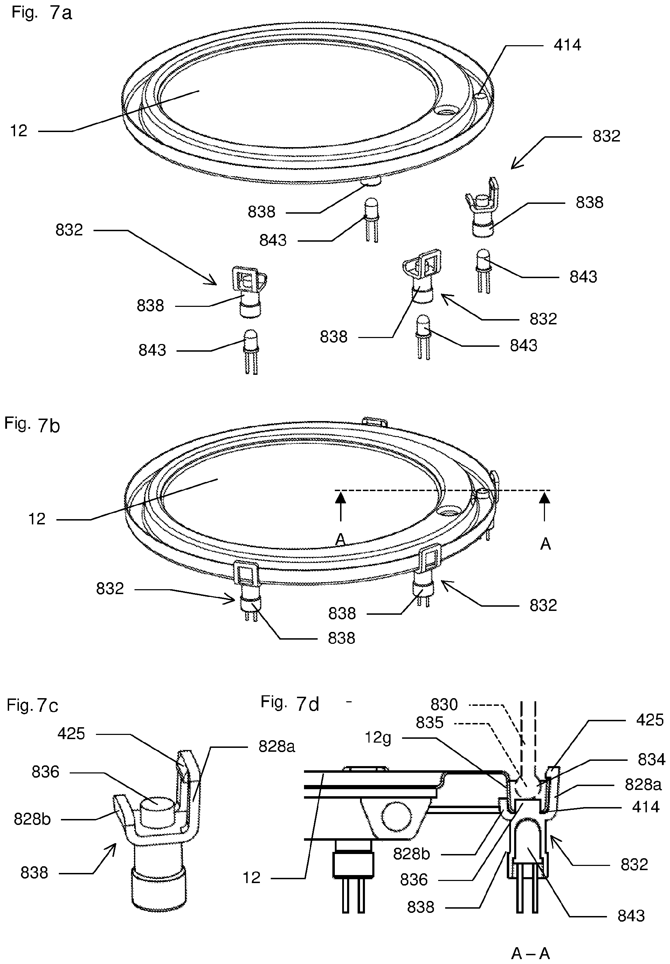

Figures 6 and 7 illustrate another embodiment as a variant of the previous embodiment in which there is provided an annular light diffuser or guide 837 that is positioned between the peripheral channel 12g of the element plate 12 and the bottom rim 835 of the vessel body 830.

The annular light diffuser 837 may include at least one male location features 839 that may locate with at least one aperture 414 in the peripheral channel 12g. The locating features 839 may function as an abutment face for the illumination assembly 832 for transmitting light onto the annular diffuser 837.

Advantageously the annular diffuser acts to transmit or diffuse the light horizontally around the rim of the 835 so that a greater proportion of the rim 835 communicates with the light source and the body 830 acts as a light guide as previously described.

The annular diffuser 837 may act to support the body 830 within the peripheral channel 12g during the gluing process and may be provided with additional mating ribs or features or annular grooves or channels 826 in the area of the rim 835 which may enhance the light transfer. These same features may also centralise the body 830 within the peripheral channel 12g prior to and during the gluing process.

In alternative embodiments the annular diffuser 837 may be provided with recesses or apertures (not shown) that align the apertures 414 in the channel 12g so that the housing 838 and/or LED or other illumination means 843 may be housed or positioned within the annular diffuser 837 to improve the light transmission means. At least one male location feature 839 may be provided that locates within at least one aperture 414 to index the previously described recesses of the annular light diffuser 837 with the corresponding apertures 414 in the peripheral channel 12g.

In further embodiments the annular diffuser 837 may comprise a plurality of discrete arcuate diffusers which may be spaced apart.

Figures 7a to 7d illustrate a further embodiment in which the housing 838 includes a least one support feature 828a with retention means, for example click feature 425, so that, in use, the housing 838 may be inserted into the aperture 414 and is supported/retained over an end of one side or portion of the channel 12g by the click feature 425 or other retention feature for example a hook (not shown). The housing 838 may also include at last one further support member 828b that cooperates with the other side or portion of the channel 12d to further support/retain the housing 838. The embodiment of Figures 7a to 7d is equally applicable to embodiments with and without a diffuser ring 837.

Advantageously, in each of the embodiments, the bottom rim 835 of the transparent or translucent vessel body 830 may abut either the annular light diffusing ring 837 or the diffuser portion 836 during the assembly and curing process, to improve the transmission of light between the illumination means 843 and the transparent or translucent vessel body 830.

In further embodiments the transparent or translucent vessel body 830 may be provided with a mould or recess (not shown) for directly receiving the illumination means 843.

In further embodiments the glue or adhesive 834 may act as a light guide between the housing 838 and/or diffuser 837 and the body 830.

In further embodiments the illumination means 832 may comprise at least one two way optical transmitter and receiver (not shown). In which case the transmitted light may be reflected back from a cosmetic or functional feature for example the lid 8 so that the position of the lid is indicated. Further examples may include: water level markings that reflect to give an indication of the water volume in the appliance, and/or turbulence and or that the vessel is in a tipped position.

In further embodiments the optical means may not be visible to the user, for example infra-red.

In further embodiments the transparent or translucent vessel body 830 may be impregnated or moulded with optically reflective particles.

Whilst the embodiments and variants describe and/or illustrate liquid heating vessels with a sheathed heating element and/or thick film printed element each of the invention can be equally applied to liquid heating vessels with alternative heating means, for example, but not limited to, diecast elements and induction heaters, etc.

As previously described the means of securing element plates to vessel bodies 830 can be equally applied to vessel bodies made from different material, for example, glass, ceramic, plastic and/or metal.

## Claims

1. An electrically powered liquid heating vessel (1) comprising means (832) for illuminating a feature (831) on a substantially transparent or translucent body (830) of the vessel (1) by projecting or diffusing a light on to an end (835) of the transparent or translucent vessel body (830), the means (832) for illuminating being provided through or beneath an element plate (12) of the vessel, **characterised in that** the element plate (12) comprises a peripheral channel (12g) for receiving the end (835) of the vessel body (830) and **in that** the peripheral channel (12g) of the element plate (12) comprises an optically transmissive sealant material (834) for securing and sealing the end (835) of the vessel body (830) within the peripheral channel.

2. The vessel of claim 1, wherein the vessel body (830) is formed of glass or polycarbonate.

3. The vessel of claim 1 or 2, wherein the peripheral channel (12g) comprises at least one aperture (414) for receiving the means (832) for illuminating.

4. The vessel of any one of claims 1 to 3, wherein the means (832) for illuminating includes a housing (838) comprising a light diffuser (836).

5. The vessel of any one of claims 1 to 4, wherein the means (832) for illuminating is in contact with a rim (835) of the vessel body (830).

6. The vessel of any one of claims 1 to 5, wherein the means (832) for illuminating is secured to the element plate (12) by a single or a plurality of support members (828b) or flanges (828).

7. The vessel of claim 3, or of any one of claims 4 to 6 each when dependent on claim 3, wherein the sealant material (834) forms a seal between the means (832) for illuminating and the aperture of the channel (12g).

8. The vessel of any preceding claim, wherein the sealant material (834) comprises a resilient, fillable, flowable or flexible sealant material.

9. The vessel of any one of claims 1 to 8, wherein the sealant material (834) is curable.

10. The vessel of any one of claims 1 to 9, wherein the means (832) for illuminating provides an indication of the state of the vessel (1).

11. The vessel of any one of claims 1 to 10, wherein the feature (831) to be illuminated comprises one or more of water level markings, indentations, printed features, cosmetic features and/or appliance operating state indicators.

12. The vessel of claim 11, wherein the means for illuminating (832) is positioned substantially beneath one or more of the water level markings, indentations, printed features cosmetic features and/or appliance operating state indicators.

13. The vessel of any one of claims 1 to 12, wherein the vessel body (830) further comprises a component or portion (825) provided on or above the vessel body, and wherein the component or portion (825) is adapted to receive light transmitted through the vessel body (830) for illumination of said component or portion (825) by said means for illuminating (832).

14. The vessel of any one of claims 1 to 13, wherein the means for illuminating (832) comprises a two way optical transmitter and receiver, and at least the vessel body (830), component or portion (825) comprises at least one feature or indentation to reflect light from the optical transmitter.

15. The vessel of any one of claims 1 to 14, wherein the means for illuminating (832) is provided within a sub base portion (19) of the vessel (1).

## Patentansprüche

1. Elektrisch betriebener Flüssigkeitsheizbehälter (1), aufweisend ein Mittel (832) zum Beleuchten eines Merkmals (831) auf einem im Wesentlichen transparenten oder durchscheinenden Körper (830) des Behälters (1) durch Projizieren oder Verbreiten eines Lichts an einem Ende (835) des transparenten oder durchscheinenden Behälterkörpers (830), wobei das Mittel (832) zum Beleuchten durch ein oder unter einem Plattenelement (12) des Behälters bereitgestellt wird, **dadurch gekennzeichnet, dass** das Plattenelement (12) einen umlaufenden Kanal (12g) zum Aufnehmen des Endes (835) des Behälterkörpers (830) aufweist, und dadurch, dass der umlaufenden Kanal (12g) des Plattenelements (12) ein optisch durchlässiges Dichtungsmaterial (834) zum Befestigen und Abdichten des Endes (835) des Behälterkörpers (830) in dem umlaufenden Kanal aufweist.

2. Behälter nach Anspruch 1, wobei der Behälterkörper (830) aus Glas oder Polycarbonat ausgebildet ist.

3. Behälter nach Anspruch 1 oder 2, wobei der umlaufende Kanal (12g) mindestens eine Öffnung (414) zum Aufnehmen des Mittels (832) zum Beleuchten aufweist.

4. Behälter nach einem der Ansprüche 1 bis 3, wobei das Mittel (832) zum Beleuchten ein Gehäuse (838) enthält, das einen Lichtdiffusor (836) aufweist.

5. Behälter nach einem der Ansprüche 1 bis 4, wobei das Mittel (832) zum Beleuchten sich in Kontakt mit einem Rand (835) des Behälterkörpers (830) befindet.

6. Behälter nach einem der Ansprüche 1 bis 5, wobei das Mittel (832) zum Beleuchten an dem Plattenelement (12) mithilfe von einem oder einer Mehrzahl von Stützelementen (828b) oder Flanschen (828) befestigt ist.

7. Behälter nach Anspruch 3 oder jeweils einem der Ansprüche 4 bis 6, wenn sie von Anspruch 3 abhängig sind, wobei das Abdichtungsmaterial (834) eine Dichtung zwischen dem Mittel (832) zum Beleuchten und der Öffnung des Kanals (12g) ausbildet.

8. Behälter nach einem der vorhergehenden Ansprüche, wobei das Abdichtungsmaterial (834) ein elastisches, befüllbares, fließfähiges oder flexibles Abdichtungsmaterial aufweist.

9. Behälter nach einem der Ansprüche 1 bis 8, wobei das Abdichtungsmaterial (834) aushärtbar ist.

10. Behälter nach einem der Ansprüche 1 bis 9, wobei das Mittel (832) zum Beleuchten eine Anzeige des Zustands des Behälters (1) bereitstellt.

11. Behälter nach einem der Ansprüche 1 bis 10, wobei das Merkmal (831), das beleuchtet werden soll, eine oder mehrere Wasserstandsmarkierungen, Vertiefungen, aufgedruckte Merkmale, Ziermerkmale und/oder Betriebszustandsanzeigen des Gerätes aufweist.

12. Behälter nach Anspruch 11, wobei das Merkmal zum Beleuchten (832) im Wesentlichen unter einer oder mehreren der Wasserstandsmarkierungen, Vertiefungen, aufgedruckten Merkmale, Ziermerkmale und/oder Betriebszustandsanzeigen des Gerätes positioniert ist.

13. Behälter nach einem der Ansprüche 1 bis 12, wobei der Behälterkörper (830) ferner eine Komponente oder einen Abschnitt (825) aufweist, der auf oder über dem Behälterkörper bereitgestellt ist, und wobei die Komponente oder der Abschnitt (825) angepasst ist, um Licht zu empfangen, dass durch den Behälterkörper (830) zum Beleuchten der Komponente oder des Abschnitts (825) mit dem Mittel zum Beleuchten (832) ausgesendet wird.

14. Behälter nach einem der Ansprüche 1 bis 13, wobei das Mittel zum Beleuchten (832) einen optischen Zweiwege-Sender und -Empfänger aufweist und mindestens der Behälterkörper (830), die Komponente oder der Abschnitt (825) mindestens ein Merkmal oder eine Vertiefung aufweisen, um Licht von dem optischen Sender zu reflektieren.

15. Behälter nach einem der Ansprüche 1 bis 14, wobei das Mittel zum Beleuchten (832) in einem Grundflächen-Abschnitt (19) des Behälters (1) bereitstellt ist.

## Revendications

1. Récipient de chauffage de liquide électrique (1), comprenant un dispositif (832) d'illumination d'un élément (831) sur un corps substantiellement transparent ou translucide (830) du récipient (1) par projection ou diffusion d'une lumière sur un bout (835) du corps transparent ou translucide (830), le dispositif (832) d'illumination étant mis en place à travers ou sous une plaque d'élément (12) du récipient, **caractérisé en ce que** la plaque d'élément (12) comprend un canal périphérique (12g) pour recevoir le bout (835) du corps du récipient (830), et **en ce que** le canal périphérique (12g) de la plaque d'élément (12) comprend un matériau d'étanchéité optiquement transmissif (834) pour fixer et sceller le bout (835) du corps du récipient (830) à l'intérieur du canal périphérique.

2. Récipient selon la revendication 1, le corps du récipient (830) étant réalisé en verre ou en polycarbonate.

3. Récipient selon la revendication 1 ou 2, le canal périphérique (12g) comprenant au moins une ouverture (414) pour la réception du dispositif (832) d'illumination.

4. Récipient selon une quelconque des revendications 1 à 3, le dispositif (832) d'illumination possédant un boîtier (838) comprenant un diffuseur de lumière (836).

5. Récipient selon une quelconque des revendications 1 à 4, le dispositif (832) d'illumination étant au contact d'un rebord (835) du corps du récipient (830).

6. Récipient selon une quelconque des revendications 1 à 5, le dispositif (832) d'illumination étant fixé sur la plaque d'élément (12) par un ou une pluralité d'éléments de support (828b) ou de brides (828).

7. Récipient selon la revendication 3, ou une quelconque des revendications 4 à 6, chacune lorsqu'elle est tributaire de la revendication 3, le matériau d'étanchéité (834) formant un joint d'étanchéité entre le dispositif (832) d'illumination et l'ouverture du canal (12g).

8. Récipient selon une quelconque des revendications précédentes, le matériau d'étanchéité (834) comprenant un matériau d'étanchéité élastique, remplissable, fluide ou flexible.

9. Récipient selon une quelconque des revendications 1 à 8, le matériau d'étanchéité (834) étant polymérisable.

10. Récipient selon une quelconque des revendications 1 à 9, le dispositif (832) d'illumination fournissant une indication sur l'état du récipient (1).

11. Récipient selon une quelconque des revendications 1 à 10, l'élément (831) à illuminer comprenant un ou plusieurs des suivants : repères de niveau d'eau, entailles, éléments imprimés, éléments cosmétiques et/ou indicateurs de l'état fonctionnel de l'appareil.

12. Récipient selon la revendication 11, le dispositif d'illumination (832) étant positionné substantiellement sous un ou plusieurs des suivants : repères de niveau d'eau, entailles, éléments imprimés, éléments cosmétiques et/ou indicateurs de l'état fonctionnel de l'appareil.

13. Récipient selon une quelconque des revendications 1 à 12, le corps du récipient (830) comprenant en outre un composant ou une partie (825) placé(e) sur le corps du récipient, ou au-dessus de celui-ci, et le composant ou la partie (825) étant adapté(e) pour recevoir la lumière transmise à travers le corps du récipient (830) pour l'illumination dudit composant ou de ladite partie (825) par ledit dispositif d'illumination (832).

14. Récipient selon une quelconque des revendications 1 à 13, le dispositif d'illumination (832) comprenant un émetteur et récepteur optique bidirectionnel, et au moins le corps du récipient (830), le composant ou la partie (825) comprenant au moins un élément ou une entaille pour refléter la lumière du transmetteur optique.

15. Récipient selon une quelconque des revendications 1 à 14, le dispositif d'illumination (832) étant doté d'une partie de socle (19) du récipient (1).
